# EUROPÄISCHE PATENTSCHRIFT

(11) **EP 3 048 777 B1**
(45) Veröffentlichungstag und Bekanntmachung des Hinweises auf die Patenterteilung: **21.11.2018**
(21) Anmeldenummer: 15174343.2
(22) Anmeldetag: 29.06.2015
(51) Int. Cl.: H04L 29/08

(54) **VERFAHREN ZUM WEBBASIERTEN ZUGRIFF AUF EIN AUTOMATISIERUNGSGERÄT, COMPUTERPROGRAMM ZUR AUSFÜHRUNG DES VERFAHRENS UND SYSTEM**
METHOD FOR WEB-BASED ACCESS TO AN AUTOMATION DEVICE, COMPUTER PROGRAM FOR EXECUTING THE METHOD AND SYSTEM
PROCÉDÉ D'ACCÈS SUR LE WEB À UN APPAREIL D'AUTOMATISATION, PROGRAMME D'ORDINATEUR DESTINÉ A EXÉCUTER LE PROCÉDÉ ET SYSTÈME

(30) Priorität: 20.01.2015 EP 15151805
(43) Veröffentlichungstag der Anmeldung: 27.07.2016
(73) Patentinhaber: Siemens Aktiengesellschaft, 80333 München (DE)
(72) Erfinder: Henrich, Andreas, 68766 Hockenheim (DE)

(56) Entgegenhaltungen:
- WO-A1-2004/012104
- DE-A1-102008 055 660
- US-A1- 2004 001 089
- US-A1- 2005 278 698
- US-A1- 2010 077 344

## Beschreibung

Die Erfindung betrifft ein Verfahren zum webbasierten Zugriff auf ein Automatisierungsgerät, also ein Verfahren, bei dem der Zugriff auf das Automatisierungsgerät erfolgt, indem mittels Telekommunikationsnetzwerken, insbesondere einem Intranet, einem Automatisierungsnetzwerk oder dem Internet, Daten vom und/oder zum Automatisierungsgerät übertragen werden. Im Rahmen eines solchen Zugriffs sind zum Beispiel eine Konfiguration oder Parametrierung sowie eine Programmierung des Automatisierungsgeräts möglich. Des Weiteren wird als Zugriff auf das Automatisierungsgerät auch eine Bedienung des Automatisierungsgeräts verstanden, etwa eine Bedienung des Automatisierungsgeräts während dieses einen technischen Prozess, zum Beispiel einen Produktionsprozess, steuert und/oder überwacht.

Des Weiteren betrifft die Erfindung ein Computerprogramm zur Ausführung des Verfahrens, nämlich ein Computerprogramm, das bei dem webbasierten Zugriff auf Seiten des sogenannten Clients ausgeführt wird. Schließlich betrifft die Erfindung auch ein System mit einem Webserver und einem als Client fungierenden Computer, auf dem ein solches Computerprogramm ausgeführt wird.

Ein webbasierter Zugriff auf ein Automatisierungsgerät ist grundsätzlich bereits bekannt. Ein Arbeiten auf mehreren Bildschirmen, wie dies von moderner Anwendungssoftware üblicherweise unterstützt wird, ist im Rahmen eines webbasierten Zugriffs auf ein Automatisierungsgerät bisher nicht möglich.

Dies wird als nachteilig angesehen, denn bei moderner Anwendungssoftware können Benutzer zum Beispiel visuelle Teile der Anwendung aufgrund mehrerer von der Anwendung unterstützter Fenster auf mehrere Bildschirme verteilen. Beispielsweise kann ein Bildschirm ein Fenster mit einem jeweils bearbeiteten Dokument anzeigen, während auf einem anderen Bildschirm in jeweils einem Fenster eine Werkzeugpalette bzw. Statusinformationen angezeigt werden.

Webbasierte Anwendungen unterstützen eine solche Funktionalität nicht. Fenster können zwar mit HTML und CSS ("cascading style sheets") abgebildet werden. Diese können aber immer nur in einem Browserfenster dargestellt werden. Auch künftige Webstandards sehen keine Unterstützung für mehrere Bildschirme oder mehrere separate Fenster vor.

Die Druckschrift US 2010/0077344A1 - Gaffney et al. "Providing modal window views for widgets on web pages" schlägt vor, ein Widget einer Web-Seite zusätzlich in einem separaten modalen Bildschirmfenster darzustellen, wobei ein Benutzer die Anzeigeparameter des modalen Fensters derart anpassen kann, dass ein ihn interessierender Bereich des Widgets angezeigt wird.

Eine Aufgabe der hier beschriebenen Neuerung besteht entsprechend darin, ein in Bezug auf die von moderner Anwendungssoftware bekannten Möglichkeiten zum Arbeiten mit mehreren Fenstern / auf mehreren Bildschirmen optimiertes Verfahren zum webbasierten Zugriff auf ein Automatisierungsgerät anzugeben.

Diese Aufgabe wird mittels eines Verfahrens mit den Merkmalen des Anspruchs 1, einem Computerprogramm gemäß Anspruch 6 und einem System gemäß Anspruch 9 gelöst.

Die Erfindung ist in Software implementiert. Insoweit ist die Erfindung ebenso ein Computerprogramm mit Programmcodemitteln, um alle Schritte des Verfahrens durchzuführen, wenn das Computerprogramm auf einem Computer mit einem Webbrowser ausgeführt wird. Ein solches Computerprogramm wird zur Unterscheidung von einem Server-Computerprogramm als Client-Computerprogramm bezeichnet.

Des Weiteren ist die Erfindung auch ein System mit einem Computer, auf dem ein Webbrowser und eine Webanwendung ausgeführt werden, wobei auf dem Computer mit dem Webbrowser und der Webanwendung ein Client-Computerprogramm ausgeführt wird.

Vorteilhafte Ausgestaltungen der Erfindung sind in den abhängigen Patentansprüchen angegeben. Die dabei offenbarten Merkmale und deren Vorteile gelten sinngemäß auch für die erfindungsgemäße Vorrichtung, also das Computerprogramm, welches auf einem Computer ausgeführt wird.

Vorteilhaft werden die in das erste der beteiligten Fenster kopierten oder verschobenen Bedienelemente in dem zweiten Fenster ausgeblendet oder aus diesem entfernt. Das ermöglicht es, das zweite Fenster ohne Informationsverlust zu verkleinern. Dabei ist es möglich, in dem Fall, in dem alle Bedienelemente des zweiten der daran beteiligten Fenster in das erste der beteiligten Fenster kopiert oder verschoben werden, das zweite Fenster komplett zu schließen, in den Hintergrund zu schalten, vollständig zu minimieren oder auszublenden. Umgekehrt kann das erste Fenster, insbesondere zur Aufnahme der zu integrierenden Bedienelemente, auch automatisch vergrößert oder umgestaltet werden.

Wenn zumindest das erste Fenster zur Darstellung von Frames eingerichtet ist, können die von dem zweiten in das erste Fenster kopierten oder verschobenen Bedienelemente in einem eigenen Frame des ersten Fensters dargestellt werden, was die Übersichtlichkeit erhöht. Zudem können einige oder alle Bedienelemente in dem zweiten Fenster bereits in einem oder mehreren Frames organisiert sein, wodurch zum Verschieben oder Kopieren dieser Bedienelemente nur die entsprechenden Frames verschoben oder kopiert werden und diese verschobenen oder kopierten Frames vorteilhaft in ähnlicher oder identischer Organisation in dem ersten Fenster dargestellt werden können.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Automatisierungssystem mit einem zum entfernten Zugriff auf ein davon umfasstes Automatisierungsgerät vorgesehenen Programmiergerät,
- FIG 2: einen Webserver als Schnittstelle zwischen dem Automatisierungsgerät und dem Programmiergerät sowie eine auf dem Programmiergerät ablaufende Webanwendung mit mehreren Anwendungsfenstern sowie einem auf dem Webserver ablaufenden Fenstermanager zur Verwaltung der Anwendungsfenster,
- FIG 3: ein Bildschirm eines Programmiergeräts mit zwei teilweise überlappenden Fenstern mit Frames und Bedienelementen der Webanwendung, und
- FIG 4: der Bildschirm, bei dem die Inhalte der zwei teilweise überlappenden Fenster der Webanwendung in einem Fenster integriert sind.

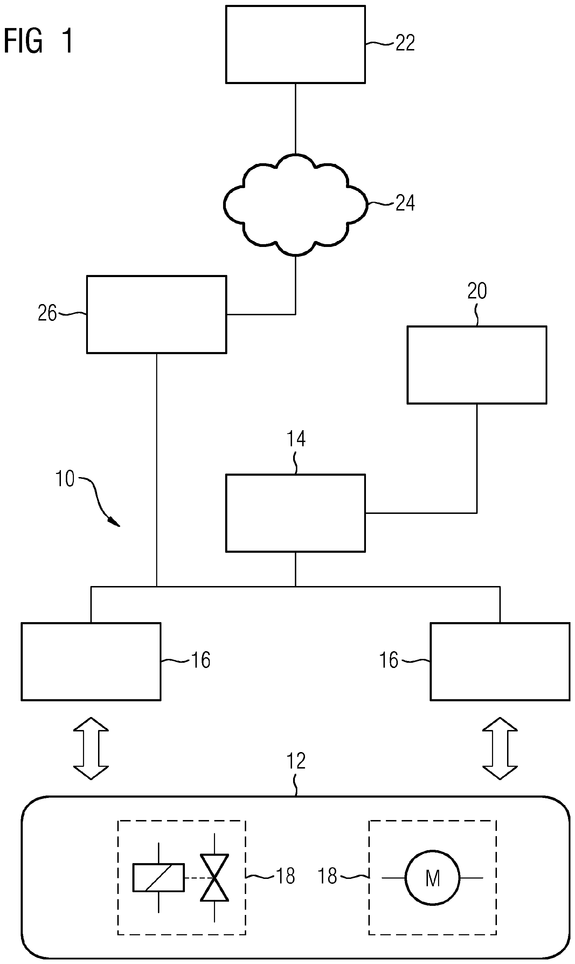

Die Darstellung in FIG 1 zeigt in schematisch vereinfachter Form ein Automatisierungssystem 10 zur Steuerung und/oder Überwachung eines nicht näher dargestellten technischen Prozesses 12. Das Automatisierungssystem 10 umfasst zumindest ein Automatisierungsgerät 14, zum Beispiel ein Automatisierungsgerät 14 in Form einer speicherprogrammierbaren Steuerung oder dergleichen, sowie zum Beispiel mehrere sogenannte dezentrale Feldgeräte 16. Ein solches Automatisierungssystem 10 entspricht im Wesentlichen dem Stand der Technik.

Das Automatisierungssystem 10 interagiert mittels der davon umfassten Komponenten 14, 16 in grundsätzlich an sich bekannter Art und Weise mit dem jeweiligen technischen Prozess 12, indem Zustände des technischen Prozesses 12 zum Beispiel in Form von Messwerten und dergleichen aufgenommen werden und entsprechend einer in Form eines oder mehrerer Steuerungsprogramme implementierten Automatisierungslösung der technische Prozess 12 beeinflusst wird, zum Beispiel indem davon umfassten Aktoren 18 angesteuert, also zum Beispiel aktiviert oder deaktiviert werden.

Eine Bedienung des Automatisierungsgeräts 14 kann zum Beispiel mittels eines Bediengeräts 20 (in der Fachterminologie oftmals auch als Bedien- und Beobachtungsgerät/BuB-Gerät oder Human-Machine-Interface HMI bezeichnet) erfolgen. Dieses ist dafür temporär oder dauerhaft an das Automatisierungsgerät 14 angeschlossen oder in sonst geeigneter Art und Weise kommunikativ mit dem Automatisierungsgerät 14 verbunden, zum Beispiel in Form eines Anschlusses an ein die Komponenten 14, 16 des Automatisierungssystems 10 verbindendes Bussystem, insbesondere einen Feldbus oder dergleichen. Eine Bedienung des Automatisierungsgeräts 14 mittels eines solchen Bediengeräts 20, bei dem es sich zum Beispiel auch um ein Programmiergerät handeln kann, ist allgemein bekannt, erfordert aber, dass sich der jeweilige Bediener zum Ort des Automatisierungssystems 10 begibt, um die entsprechenden Bedienhandlungen an dem Bediengerät 20 vornehmen zu können.

Zusätzliche Flexibilität, aber auch ein verbesserter Komfort für den Bediener ergeben sich, wenn die Bedienung des Automatisierungsgeräts 14 oder mehrerer Automatisierungsgeräte 14 oder anderer Komponenten 14, 16 des Automatisierungssystems 10 oder anderer Automatisierungssysteme von grundsätzlich jedem beliebigen Ort erfolgen kann. Zu diesem Zweck ist bereits in der Vergangenheit ein webbasierter Zugriff auf Automatisierungsgeräte 14 der hier in Rede stehenden Art vorgeschlagen worden. Ein solcher webbasierter Zugriff erfolgt mittels eines Geräts in Form von oder nach Art eines Computers, das hier auch als Bediengerät bezeichnet werden könnte, zur Unterscheidung von dem Bediengerät 20 aber im Folgenden - ohne Verzicht auf eine weitergehende Allgemeingültigkeit - als Programmiergerät 22 bezeichnet wird. Die im Folgenden also als Programmiergerät 22 bezeichnete Komponente kann also sowohl ein Engineering-System, also auch jegliches anderes Gerät zur Darstellung von Zuständen und/oder Bedienung, Beeinflussung oder Steuerung eines industriellen Prozesses sein, also auch und gerade ein Bediengerät (BuB - Bedien- und Beobachtungsgerät), HMI-Gerat (Human-Machine-Interface) oder dergleichen. Die verwendete Hardware kann zwar, wie im folgenden Ausführungsbeispiel angeführt, ein Computer mit Monitor sein, aber auch als Tablet-Computer, Mobiltelefon ("Smartphone"), Datenbrille o.ä. ausgeführt sein.

Das Programmiergerät 22 kann sich an einem grundsätzlich beliebigen Ort befinden und hat Zugang zum Internet 24 (alternativ ist auch ein anderes Datennetzwerk verwendbar). Im Internet 24 oder mittels des Internets 24 ist für das Programmiergerät 22 ein Webserver 26 erreichbar, der seinerseits direkt oder indirekt, zum Beispiel ebenfalls über das Internet 24, kommunikativ mit dem Automatisierungssystem 10 verbunden ist, zum Beispiel im Wege eines Anschlusses an dessen Bussystem.

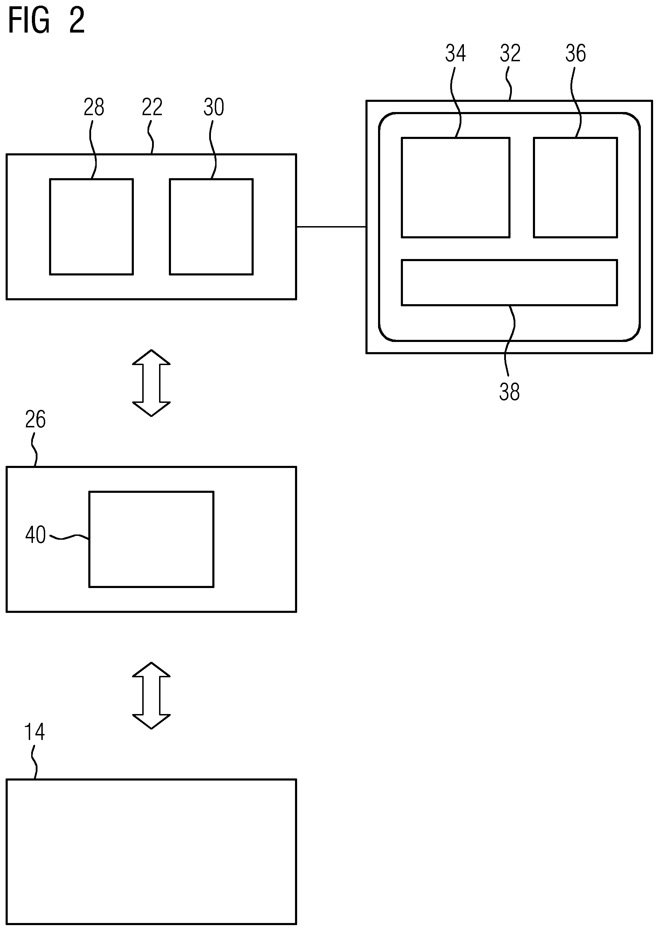

Die Darstellung in FIG 2 wiederholt - in nochmals weiter vereinfachter Form - einzelne Details der Darstellung in FIG 1, nämlich das Programmiergerät 22, den Webserver 26 sowie ein Automatisierungsgerät 14. Das Programmiergerät 22 fungiert in Bezug auf den als Server fungierenden Webserver 26 als Client.

In einen Speicher des Programmiergeräts 22 sind in an sich bekannter Art und Weise Computerprogramme geladen. Bei den Computerprogrammen handelt es sich um ein erstes Computerprogramm in Form eines sogenannten Webbrowsers 28 sowie ein zweites Computerprogramm in Form einer sogenannten Webanwendung 30. Bei dem als Schnittstelle zwischen dem Programmiergerät 22 und dem Automatisierungsgerät 14 fungierenden Webserver 26 handelt es sich in an sich bekannter Art und Weise ebenfalls um einen Computer und ein auf dem Computer ablaufendes Computerprogramm. Die Schnittstellenfunktion des Webservers 26 besteht damit zwischen der auf dem Programmiergerät 22 ablaufenden Webanwendung 30, die ihrerseits den WebBrowser 28 verwendet oder in diesem abläuft, und dem Automatisierungsgerät 14. Es ist dabei insbesondere möglich, dass die Webanwendung als Web-Applikation, beispielsweise als Applet oder Script, von dem Webserver 26 auf den Browser 28 geladen und dort zur Ausführung gebracht wird.

Zur Darstellung einer Benutzeroberfläche für die in Bezug auf das Automatisierungsgerät 14 vorzunehmenden/vorgenommenen Bedienhandlungen sowie der Ergebnisse solcher Bedienhandlungen ist auf Seiten des Programmiergeräts 22 in grundsätzlich an sich bekannter Art und Weise zumindest ein Bildschirm 32 vorgesehen. Mittels des Bildschirms 32 erfolgt eine Darstellung zumindest eines Fensters 34 und gemäß der hier vorgeschlagenen Neuerung optional eine Darstellung mehrerer Fenster 34, 36, 38, wobei die Anzahl der Fenster grundsätzlich nicht begrenzt ist und insofern zum Beispiel ein, zwei, drei, vier usw. Fenster 34, 36, 38 darstellbar sind.

Zur Verwaltung einer Mehrzahl von Fenstern 34, 36, 38 für die Webanwendung 30 auf Seiten des Programmiergeräts 22 ist ein Fenstermanager 40 vorgesehen. Bei diesem handelt es sich um ein Computerprogramm oder eine Software-Funktionalität, das bzw. die auf dem Webserver 26 ausgeführt wird. Der Fenstermanager 40 verteilt die Sichten auf die Anwendungslogik auf die verschiedenen Fenster 34, 36, 38. Bei diesen handelt es sich um einzelne Fenster 34, 36, 38 des Webbrowsers 28, also um Browserfenster 34, 36, 38.

Der Vorteil des hier vorgestellten Ansatzes besteht darin, dass die Abbildung von Fenstern 34, 36, 38 der Webanwendung 30 per HTML/CSS und mithilfe des serverseitigen Fenstermanagers 40 realisiert werden kann und im Ergebnis eine vollwertige Desktopanwendung mit mehreren Fenstern 34, 36, 38 möglich ist. Diese ist zudem auf nahezu allen Plattformen ablauffähig. Die Darstellung der Fenster 34, 36, 38 ist nicht auf einen einzelnen Bildschirm 32 des Programmiergeräts 22 beschränkt. So wie dies bei moderner Anwendungssoftware ebenfalls möglich ist, können an das Programmiergerät 22 mehrere Bildschirme 32 angeschlossen sein und der Benutzer erhält die Möglichkeit, die einzelnen Fenster 34, 36, 38 auf unterschiedliche Bildschirme 32 zu verteilen. Dazu kann die Webanwendung 30 zum Beispiel eine "Verschiebe auf Bildschirm"-Funktion anbieten. Der Benutzer kann ein Anwendungsfenster 34, 36, 38 so direkt auf den gewünschten Bildschirm 32 platzieren.

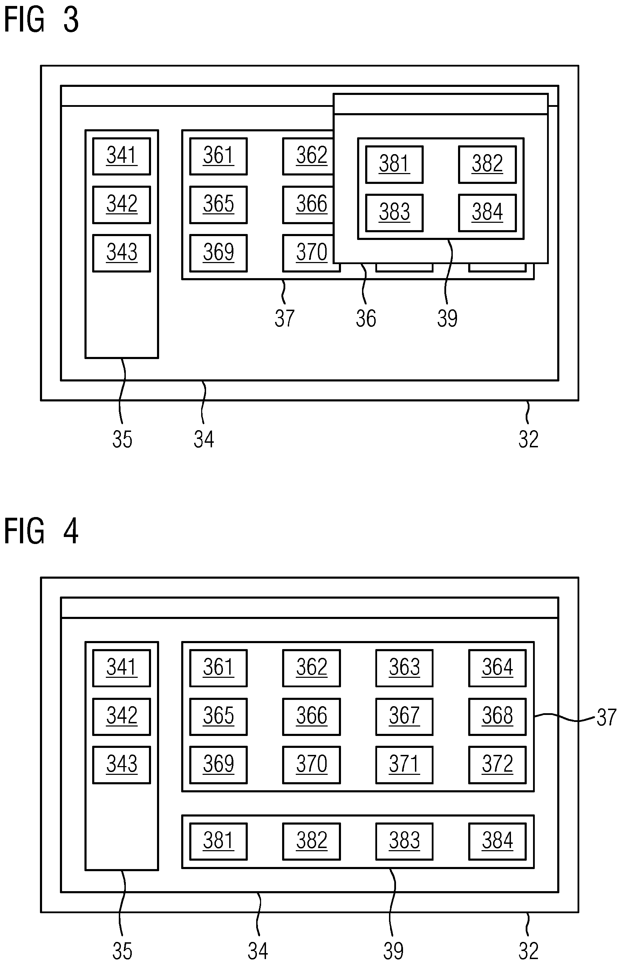

In FIG 3 ist nun exemplarisch der Bildschirm 32 aus der FIG 2 dargestellt, wobei hier die beiden Fenster 34, 36 detaillierter visualisiert sind. Das erste Fenster 34 umfasst zwei Frames 35, 37, wobei im Frame 35 die Bedienelemente 341, ..., 343 angeordnet sind, und im Frame 37 die Bedienelemente 361, ..., 372. Dabei bezeichnet der Begriff "Bedienelemente" allgemein alle einzelnen Elemente, die zur Visualisierung und Bedienung eingesetzt werden können, also Graphiken, Buttons, Eingabefelder, Anzeigeelemente etc. Das zweite Fenster 36 umfasst einen einzigen Frame 39, in dem die Bedienelemente 381, ..., 384 angeordnet sind. In der Figur ist zu sehen, dass das zweite Fenster 36 das erste Fenster 34 überlappt und damit dessen Inhalte teilweise überdeckt, insbesondere die Bedienelemente 363, 364, 367, 368, 371 und 372.

In FIG 4 ist die erfindungsgemäße Lösung des Verdeckungs-Problems gezeigt, wobei die Bedienelemente 381, ..., 384 des zweiten Fensters 36 in das erste Fenster 34 verschoben wurden und das zweite Fenster 36 ausgeblendet wurde. Alternativ genügt es auch, die Bedienelemente 381, ..., 384 in das erste Fenster zu kopieren oder in diesem zu "verlinken", also einen Verweis einzufügen, so dass das zweite Fenster 36 grundsätzlich intakt bleibt und lediglich in den Hintergrund (hinter Fenster 34) geschaltet wird.

Im Beispiel der FIG 3 und FIG 4 werden die Bedienelemente Frame-weise behandelt, was den Vorteil hat, dass funktional zusammengehörende Bedienelemente auch nach der Clientseitigen Verbringung in ein anderes Fenster gegliedert bleiben. Dennoch funktioniert die Erfindung auch ohne Frames, wobei dann die Bedienelemente ebenfalls automatisch sinnvoll angeordnet werden können, beispielsweise sortiert nach Herkunft-Fenster oder gemäß anderen Merkmalen.

Die vorstehend beschriebene Kombination von Inhalten verschiedener Fenster kann Client-seitig erfolgen, also durch ein Computerprogramm (Web-Anwendung 30) des darstellenden PC, insbesondere also durch einen Programmbaustein oder ein sog. Plug-In eines Webbrowsers. Die beiden letztgenannten Varianten sind besonders vorteilhaft in den Fällen, in denen die beteiligten Fenster durch Instanzen desselben Webbrowsers erzeugt werden. Die Web-Anwendung 30 führt also im Wesentlichen ein Client-seitiges Fenster-Management der darzustellenden Fenster durch, während der Fenster-Manager 40 des Webservers 26 das Server-seitige Fenster-Management durchführt.

Durch ein Engineering kann festgelegt werden, welches Fenster bzw. welche Bedienelemente oder Inhalte in welches andere Fenster im Falle einer Verdeckung oder Überlappung integriert werden, beispielsweise anhand einer Hierarchie der Fenster, anhand der Größe oder Anzahl der Bedienelemente etc. Es kann auch festgelegt werden, dass im Falle einer Überlappung ein Benutzerhinweis ausgegeben wird und der Benutzer dann selbst festlegen kann, welches Fenster bzw. dessen Inhalte in welches andere Fenster integriert werden. Außerdem können Mittel in einem Computerprogramm vorgesehen sein, um die Integration rückgängig zu machen, insbesondere dann, wenn die aus einem anderen Fenster übernommenen Bedienelemente nicht mehr benötigt werden oder das ursprüngliche Quell-Fenster geschlossen wird. Dazu ist es vorteilhaft, wenn zu den verschobenen oder anderweitig integrierten Bedienelementen oder deren Frames die Quelle (Quell-Fenster) jeweils gespeichert wird. Schließlich kann auch vorgesehen sein, dass bei Vorliegen mehrerer anzuzeigender Fenster grundsätzlich alle Inhalte in einem einzigen Fenster dargestellt werden, insbesondere gegliedert in verschiedenen Frames.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Zugriff auf ein Automatisierungsgerät (14) mittels zumindest eines Webservers (26), zumindest eines Webbrowsers (28) und einer Webanwendung (30), **dadurch gekennzeichnet,**
**dass** der Webserver (26) mehrere Fenster (34, 36, 38) der Webanwendung (30) verwaltet und der zumindest eine Webbrowser (28) zumindest eines der Fenster (34, 36, 38) anzeigt, und
**dass** durch die Webanwendung (30) in dem Fall, in dem ein erstes der Fenster (34) ein zweites der Fenster (36) verdeckt und/oder verdeckend überlappt oder umgekehrt das zweite Fenster (36) das erste Fenster (34) verdeckt oder verdeckend überlappt, Bedienelemente (381-384) des zweiten Fensters (36) in das erste Fenster (34) integriert werden und das zweite Fenster (36) derart manipuliert wird, dass das erste Fenster (34) oder zumindest dessen Bedienelemente (341-343, 361-372, 381-384) inklusive der aus dem zweiten Fenster (36) integrierten Bedienelemente (381-384) sichtbar werden.

2. Verfahren nach Patentanspruch 1,
**dadurch gekennzeichnet,**
**dass** die in das erste der Fenster (34) kopierten oder verschobenen Bedienelemente (381-384) in dem zweiten Fenster (36) ausgeblendet oder aus diesem entfernt werden.

3. Verfahren nach Patentanspruch 2,
**dadurch gekennzeichnet,**
**dass** zumindest in dem Fall, in dem alle Bedienelemente (381-384) des zweiten der Fenster (36) in das erste der Fenster (34) kopiert oder verschoben werden, das zweite Fenster (36) geschlossen, in den Hintergrund gesetzt, minimiert, aus dem Überlappungsbereich verschoben oder ausgeblendet wird.

4. Verfahren nach einem der vorhergehenden Patentansprüche,
**dadurch gekennzeichnet,**
**dass** zumindest das erste Fenster (34) zur Darstellung von Frames (35, 37) eingerichtet ist, wobei die von dem zweiten in das erste Fenster (34) kopierten oder verschobenen Bedienelemente (381-384) in zumindest einem separaten Frame (39) des ersten Fensters (34) dargestellt werden.

5. Verfahren nach Patentanspruch 4,
**dadurch gekennzeichnet,**
**dass** einige oder alle Bedienelemente (381-384) in dem zweiten Fenster (36) in einem oder mehreren Frames (39) organisiert sind und zum Verschieben oder Kopieren dieser Bedienelemente (381-384) die entsprechenden Frames (39) verschoben oder kopiert werden und diese verschobenen oder kopierten Frames (39) in ähnlicher oder identischer Organisation in dem ersten Fenster (34) dargestellt werden.

6. Computerprogramm (40) mit Programmcodemitteln, um alle Schritte der Webanwendung (30) des Anspruchs 1 durchzuführen, wenn das Computerprogramm (40) auf einem Computer mit zumindest einem Webbrowser (28) ausgeführt wird.

7. Computerprogramm (40) nach Patentanspruch 6,
**dadurch gekennzeichnet,**
**dass** das Computerprogramm (40) in zumindest einem oder jedem der Webbrowser (28) integriert ist.

8. Computerprogramm (40) nach Patentanspruch 7,
**dadurch gekennzeichnet,**
**dass** das Computerprogramm (40) als ein Plug-In für Webbrowser (28) ausgeführt ist.

9. System mit einem Computer, auf dem ein Webserver (26) ausgeführt wird, sowie zumindest einem Computer, auf dem ein Webbrowser (28) und eine Webanwendung (30) ausgeführt werden, wobei auf dem Computer mit dem Webbrowser (28) ein Computerprogramm gemäß Anspruch 6 ausgeführt wird.

## Claims

1. Method for accessing an automation device (14) by means of at least one web server (26), at least one web browser (28) and a web application (30),
**characterized**
**in that** the web server (26) manages a plurality of windows (34, 36, 38) of the web application (30) and the at least one web browser (28) displays at least one of the windows (34, 36, 38), and
**in that**, if a first of the windows (34) conceals a second of the windows (36) and/or overlaps it in a concealing manner or conversely the second window (36) conceals the first window (34) or overlaps it in a concealing manner, the web application (30) integrates operating elements (381-384) of the second window (36) into the first window (34) and manipulates the second window (36) in such a manner that the first window (34) or at least its operating elements (341-343, 361-372, 381-384), including the operating elements (381-384) integrated from the second window (36), become visible.

2. Method according to Patent Claim 1,
**characterized**
**in that** the operating elements (381-384) copied or shifted into the first of the windows (34) are hidden in the second window (36) or are removed from the latter.

3. Method according to Patent Claim 2,
**characterized**
**in that**, at least if all operating elements (381-384) of the second of the windows (36) are copied or shifted into the first of the windows (34), the second window (36) is closed, moved into the background, minimized, shifted from the overlap area or hidden.

4. Method according to one of the preceding patent claims, **characterized**
**in that** at least the first window (34) is set up to display frames (35, 37), wherein the operating elements (381-384) copied or shifted from the second window into the first window (34) are displayed in at least one separate frame (39) of the first window (34).

5. Method according to Patent Claim 4,
**characterized**
**in that** some or all operating elements (381-384) in the second window (36) are organized in one or more frames (39) and, in order to shift or copy these operating elements (381-384), the corresponding frames (39) are shifted or copied and these shifted or copied frames (39) are displayed in the first window (34) in a similar or identical organization.

6. Computer program (40) having program code means for carrying out all steps of the web application (30) from Claim 1 when the computer program (40) is executed on a computer having at least one web browser (28).

7. Computer program (40) according to Patent Claim 6,
**characterized**
**in that** the computer program (40) is integrated in at least one or each of the web browsers (28).

8. Computer program (40) according to Patent Claim 7,
**characterized**
**in that** the computer program (40) is in the form of a plug-in for web browsers (28).

9. System having a computer, on which a web server (26) is implemented, and at least one computer, on which a web browser (28) and a web application (30) are implemented, wherein a computer program according to Claim 6 is executed on the computer having the web browser (28).

## Revendications

1. Procédé d'accès à un appareil (14) d'automatisation au moyen d'au moins un serveur (26) web, d'au moins un navigateur (28) web et d'une application (30) web,
**caractérisé**
**en ce que** le serveur (26) web gère plusieurs fenêtres (34, 36, 38) de l'application (30) web et le au moins un navigateur (28) web indique au moins l'une des fenêtres (34, 36, 38) et
**en ce que**, par l'application (30) web, dans le cas où une première des fenêtres (34) recouvre une deuxième des fenêtres (36) et/ou la chevauche à recouvrement, ou inversement la deuxième fenêtre (36) recouvre la première fenêtre (34) ou la chevauche à recouvrement, on intègre des éléments (381 à 384) de service de la deuxième fenêtre (36) à la première fenêtre (34) et on manipule la deuxième fenêtre (36) de manière à rendre visible la première fenêtre (34) ou au moins ses éléments (341 à 343, 361 à 372, 381 à 384) de service, y compris les éléments (381 à 384) de service intégrés, dans la deuxième fenêtre (36).

2. Procédé suivant la revendication 1,
**caractérisé**
**en ce que** l'on masque, dans la deuxième fenêtre (36) ou on en élimine les éléments (381 à 384) de service copiés ou déplacés dans la première des fenêtres (34).

3. Procédé suivant la revendication 2,
**caractérisé**
**en ce qu'**au moins dans le cas où l'on copie et l'on déplace tous les éléments (381 à 384) de service de la deuxième des fenêtres (36) à la première des fenêtres (34), on ferme la deuxième fenêtre (36), on la met en arrière plan, on la minimise, on la déplace de la région de chevauchement ou on la masque.

4. Procédé suivant l'une des revendications précédentes,
**caractérisé**
**en ce qu'**au moins la première fenêtre (34) est agencée pour la représentation de trames (35, 37), dans lequel on représente, dans au moins une trame (39) distincte de la première fenêtre (34), les éléments (381 à 384) de service copiés ou déplacés de la deuxième à la première fenêtre (34).

5. Procédé suivant la revendication 4,
**caractérisé**
**en ce que** certains ou tous les éléments (381 à 384) de service de la deuxième fenêtre (36) sont organisés en une trame ou en plusieurs trames (39) et, pour le déplacement ou le copiage de ces éléments (381 à 384) de service, on déplace ou on copie les trames (39) correspondantes et on représente ces trames (39) déplacées ou copiées dans la première fenêtre (34) suivant une organisation analogue ou identique.

6. Programme (40) d'ordinateur ayant des moyens de code de programme pour effectuer tous les stades de l'application (30) web suivant la revendication 1 lorsque le programme (40) d'ordinateur est réalisé sur un ordinateur ayant au moins un navigateur (28) web.

7. Programme (40) d'ordinateur suivant la revendication 6,
**caractérisé**
**en ce que** le programme (40) d'ordinateur est intégré à au moins un navigateur (28) web ou à chaque ordinateur (28) web.

8. Programme (40) d'ordinateur suivant la revendication 7,
**caractérisé**
**en ce que** le programme (40) d'ordinateur est réalisé sous la forme d'un plug-in pour un navigateur (28) web.

9. Système comprenant un ordinateur, sur lequel est réalisé un serveur (26) web ainsi qu'au moins un ordinateur, sur lequel est réalisé un navigateur (28) web et une application (30) web, dans lequel un programme d'ordinateur suivant la revendication 6 est réalisé sur l'ordinateur ayant le navigateur (28) web.
